# EUROPEAN PATENT SPECIFICATION

(11) **EP 3 574 209 B1**
(45) Date of publication and mention of the grant of the patent: **22.07.2020**
(21) Application number: 18755576.8
(22) Date of filing: 08.06.2018
(51) Int. Cl.: F03B 7/00

(54) **HYDROENERGETIC MOTOR**
HYDROENERGETISCHER MOTOR
MOTEUR HYDROÉNERGÉTIQUE

(30) Priority: 09.06.2017 SI 201700163
(43) Date of publication of application: 04.12.2019
(73) Proprietor: Goran Kepnik S.P., 8261 Jesenice na Dolenjskem (SI)
(72) Inventor: Kepnik, Goran, 8261 Jesenice na Dolenjskem (SI)
(74) Representative: Jersan, Tatjana
(86) International application number: PCT/SI2018/000011
(87) International publication number: WO 2018/226166

(56) References cited:
- CN-A- 105 464 889
- DE-A1- 2 928 476
- JP-A- H06 123 273
- US-A- 212 186
- US-A- 379 753
- US-A- 5 944 480

## Description

The subject of the invention is a device that converts the hydropotential energy of the column of liquid of defined height *H,* into useful (exploitable) mechanical energy produced through a wheel rotation and thus achieving a torque in an original way.

The technical problem solved by the present invention is direct conversion of the hydro-potential energy into mechanical energy by means of a column of liquid, which results in the increased efficiency. Considering the energy losses, mechanical and hydraulic friction and hydrodynamic losses during liquid flowing out through the nozzle are present.

US patent No. 212186 is disclosing the device for conversion of the hydro-potential energy into mechanical energy whereby a water wheel of the endless-belt type is stretched between two wheels and having buckets arranged on the belt at regular intervals. Water is supplied through a flume which leads to a vertical chute in which the belt moves.

In the present invention a device for direct conversion of the hydro-potential energy into mechanical energy by means of a column of liquid is disclosed, which results in the increased efficiency and of a simple structure.

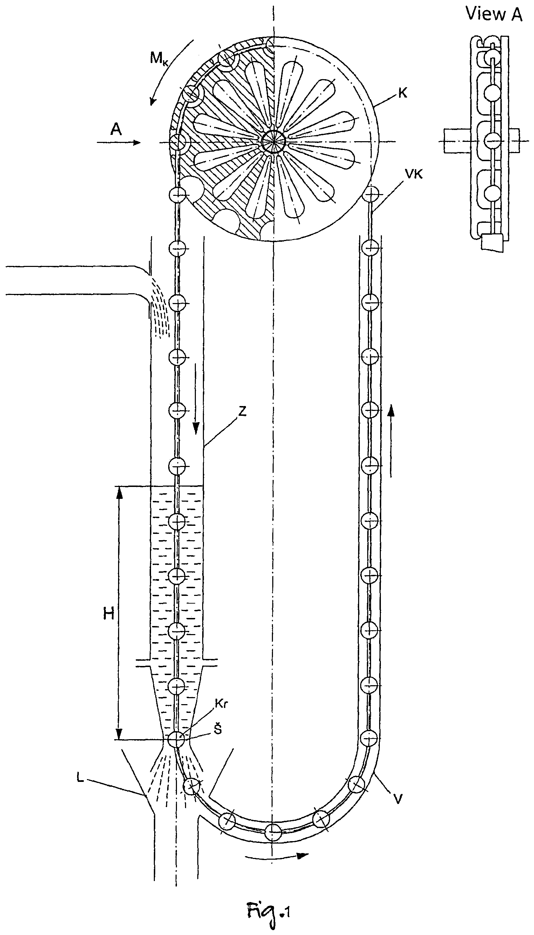

The invention will be described in Fig. 1, which shows a hydroenergetic motor according to the invention.

The hydroenergetic motor consists of: a chain *(VK)* with balls (Kr); a wheel *(K)* to which the movement of the chain (*VK)* is transferred to, and wherein the wheel (K) has grooves around its circumference at uniform intervals for receiving the balls (Kr); a reservoir (*Z*), which is preferably in the form of a vertical pipe, in which a column of the liquid of the height *H* is formed and to which, in its lower part, a conical attachment with a nozzle (*Š)* is mounted; a funnel *(L)* that collects the liquid flowing out of the nozzle (Š) and guiding means *(V)* which directs the movement of the chain *(VK)* so that it moves in a straight line in the guide means (V) upwards, and at the same time preventing any uncontrolled oscillations. The force of the pressure of the column of the liquid (H) acts on the ball *(Kr)* which is currently located in the nozzle (*Š)* and squeezing it out of the nozzle (*Š)* thus driving the chain *(VK)* with the balls (Kr) in the guide means *(V)* in the upwards direction, as is marked with the arrows. The procedure is repeated when the next ball *(Kr)* enters the nozzle (*Š).* Simultaneously a certain amount of liquid flows through the nozzle into a funnel *(L).* The movement of the chain *(VK)* is thus transferred to the wheel *(K)* and in this way the torque *M_{K},* i.e. the rotation of the wheel (K), is achieved. In order for the ball (Kr) to slip through the nozzle (Š) it is necessary to provide the clearance between the ball (Kr) and the nozzle (Š), whereas the clearance is at least of the value that, when the ball (Kr) is located in the nozzle (Š), the ball (Kr) does not touch the nozzle (Š), so that there is no mechanical friction between the sphere (Kr) and the nozzle (Š) during the operation of the hydroenergetic motor.

All elements of the hydroenergetic motor, that is: the balls (Kr), the wheel (K), the guiding means (V), the reservoir (Z), the conical attachment with the nozzle (Š), the funnel (L), can be made out of plastic.

Apart from balls (Kr), elements of a different shape (for example, ovals) can be attached to the chain if this reduces energy losses and increases the efficiency of the engine.

The use of the hydroenergetic motor with the purpose of the exploitation of the hydropotential energy of the waste sewage liquid flowing through the sewer system of the single-one or several multi-story building is described below.

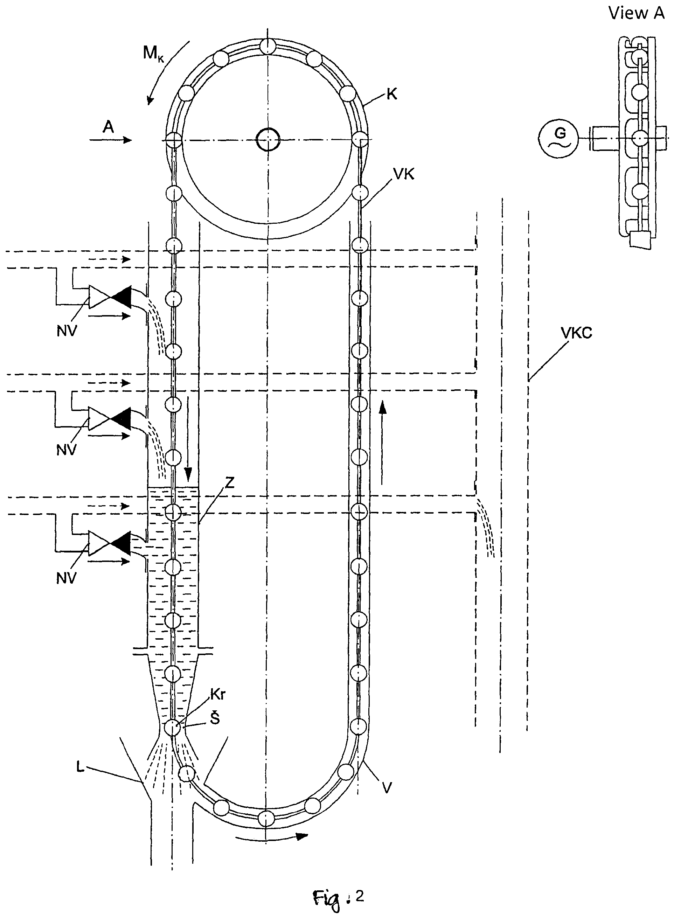

The installation scheme of the hydroenergetic motor of the invention into the sewer system of the multi-story building will be described by Fig. 2. The hydroenergetic motor built-into the sewer system of the single-one or several multi-story buildings, makes the exploitation of the hydropotential energy of the waste sewage liquid possible. In the building, in addition to the main vertical sewer pipe (*VKC*), the hydroenergetic motor with the reservoir (*Z*) is placed. Into said reservoir (Z) a waste liquid may flow through the non-return valves (*NV*) in the direction indicated by the solid line arrows. If the level of the waste liquid in the reservoir (*Z*) is above the level of the drainage pipe connection of certain floor, the non-return valve (*NV*) prevents the flow of the waste liquid back into the sewer system (into discharged waste pipe), thus diverting the waste liquid into the vertical sewer pipe (*VKC*) as shown by the dashed line arrows. As soon as the level of the waste liquid in the reservoir (*Z*) drops below the level of the drainage pipe connection of a certain floor the non-return valve (*NV*) redirects back the flow of the waste liquid into the reservoir (Z) in order to exploit the hydropotential energy of the column of the waste liquid. The wheel *(K)* drives a generator for the production of electricity, which can be used for various purposes (e.g. as a staircase illumination) or it can be stored in the batteries.

Due to the fact that the wheel (K) is not in direct contact with the fluid, and whereas, at the same time, the hydroenergetic motor according to the invention can also generate a torque with small and uneven flows, it can be used where the use of conventional hydroelectric converters is not appropriate due to the specific characteristics of the working liquids and specific hydrodynamic flow parameters, for example in sewage systems, in order to exploit the hydro-potential energy of the waste liquid of the sewage system. In those systems the use of a hydroenergetic motor according to the invention is preferred. The hidroenergetic motor, according to the invention can be installed at any location within the sewage system as a part of the single-one or several multi-story buildings with the purpose of exploiting hydro-potential energy of the waste sewage fluid flowing through either one or more building objects.

## Claims

1. A hydroenergetic motor, as an energy converter for transforming the hydropotential energy of a pressure of a column of liquid in a reservoir (Z) into mechanical energy in the form of a torque
**characterized in that,**
it consists of: a chain (*VK*) with balls (Kr); a wheel *(K)* to which the movement of the chain *(VK)* is transferred to and wherein the wheel (K) has grooves around its circumference at uniform intervals for receiving the balls (Kr); a reservoir (*Z*), which may be in the form of a vertical pipe, in which a column of the liquid of the height *(H)* is formed and to which, in its lower part, a conical attachment with a nozzle (*Š)* is mounted; a funnel *(L)* that collects the liquid flowing out of the nozzle (*Š)* and a guiding means *(V)* which directs the movement of the chain *(VK)* so that it moves in a straight line in the guiding means (V) upwards and prevents any uncontrolled oscillations; wherein the force of the pressure of the liquid column (H) acts on the ball *(Kr)* which is currently located in the nozzle (*Š)* and squeezing it out of the nozzle (*Š)* thus driving the chain (*VK*) with the balls (Kr) in the guiding means(V) in the upward direction and wherein the movement of the chain *(VK)* is transferred to the wheel *(K),* thus achieving a torque *M_{K}* i.e. rotation of the wheel (K).

2. Hydroenergetic motor according to claim 1
**characterized in that,**
a clearance between the ball (Kr) and the nozzle (Š) is provided, whereas the clearance is at least of the value that, when the ball (Kr) is located in the nozzle (Š), the ball (Kr) does not touch the nozzle (Š), so that there is no mechanical friction between the ball (Kr) and the nozzle (Š) during the operation of the hydroenergetic motor.

3. A use of the hydroenergetic motor according to claim 1 for the electricity generation exploiting the potential energy of the waste liquid column of the sewer system flowing through the single-one or several multi-story buildings
**characterized in that,**
in addition to the main vertical sewer pipe (*VKC*), the hydroenergetic motor with the reservoir (Z) is installed into which a waste liquid flows through non-return valves (*NV*), and with an electric generator attached to the wheel (K), wherein non-return valves (NV) prevent the flow of the waste liquid from the reservoir (Z) back into the sewer system thus diverting the waste liquid into the main vertical sewer pipe (*VKC*); and as soon as the level of waste liquid in the reservoir (*Z*) drops below the level of the drainage pipe connection of a certain floor, the non-return valve (*NV*) redirects back the flow of the waste liquid into the reservoir (Z) of the hydroenergetic motor, wherein the hydropotential energy of the waste liquid column is converted firstly into the mechanical energy and then into the electric energy.

## Patentansprüche

1. Hydroenergetischer Motor als Energiewandler zur Umwandlung der hydropotentiellen Energie des Drucks einer Flüssigkeitssäule in einem Reservoir (Z) in mechanische Energie in Form eines Drehmoments
**dadurch gekennzeichnet, dass**
er besteht aus: einer Kette (*VK*) mit Kugeln (Kr); einem Rad (*K*), auf das die Bewegung der Kette (*VK*) übertragen wird, und wobei das Rad (K) in gleichmäßigen Abständen Nuten um seinen Umfang zur Aufnahme der Kugeln (Kr) aufweist; einem Reservoir (*Z*), das als vertikales Rohr ausgebildet sein kann, in dem eine Säule für eine Flüssigkeit der Höhe (*H*) ausgebildet ist und an dem sich, im unteren Teil, ein kegelförmiger Ansatz mit einer Düse (*Š*) befindet; einem Trichter (*L*), der die aus der Düse (*Š*) austretende Flüssigkeit auffängt, und einem Führungsmittel (*V*), das die Bewegung der Kette (*VK*) derart ausrichtet, dass sie sich geradlinig in dem Führungsmittel (V) nach oben bewegt und etwaige unkontrollierte Schwingungen verhindert; wobei die Kraft des Drucks der Flüssigkeitssäule (H) auf die sich derzeit in der Düse (*Š*) befindlichen Kugeln (*Kr*) wirkt und diese aus der Düse (*Š*) auspresst und so die Kette (*VK*) mit den Kugeln (Kr) in den Führungsmitteln (V) nach oben treibt und wobei die Bewegung der Kette (*VK*) auf das Rad (*K*) übertragen wird, wodurch ein Drehmoment *M_{K},* d. h. eine Drehung des Rades (K), erreicht wird.

2. Hydroenergetischer Motor nach Anspruch 1, **dadurch gekennzeichnet, dass** ein Spielraum zwischen der Kugel (Kr) und der Düse (Š) vorgesehen ist, während der Spielraum mindestens so groß ist, dass bei in der Düse (Š) befindlicher Kugel (Kr) die Kugel (Kr) die Düse (Š) nicht berührt, so dass während des Betriebs des hydroenergetischen Motors keine mechanische Reibung zwischen der Kugel (Kr) und der Düse (Š) entsteht.

3. Verwendung des hydroenergetischen Motors nach Anspruch 1 zur Stromerzeugung unter Ausnutzung der potentiellen Energie der Abwassersäule des durch das Ein- oder Mehrgeschossgebäude fließenden Abwassersystems,
**dadurch gekennzeichnet, dass**
zusätzlich zu dem vertikalen Hauptkanalrohr (*VKC*) der hydroenergetische Motor mit dem Reservoir (Z) eingebaut ist, in den eine Abfallflüssigkeit durch Rückschlagventile (*NV*) strömt, und mit einem am Rad (K) angebrachten elektrischen Generator, wobei die Rückschlagventile (NV) den Rückfluss der Abfallflüssigkeit aus dem Reservoir (Z) in das Kanalsystem verhindern und so die Abfallflüssigkeit in das Hauptvertikalkanalrohr (*VKC*) umleiten; und sobald das Niveau der Abfallflüssigkeit im Reservoir (*Z*) unter das Niveau des Drainagerohranschlusses einer bestimmten Etage fällt, das Rückschlagventil (*NV*) den Strom der Abfallflüssigkeit in das Reservoir (Z) des hydroenergetischen Motors zurückleitet, wobei die hydropotentielle Energie der Abfallflüssigkeitssäule zunächst in die mechanische Energie und dann in elektrische Energie umgewandelt wird.

## Revendications

1. Moteur hydroénergétique en tant que convertisseur d'énergie pour transformer l'énergie hydropotentielle de la pression d'une colonne de liquide dans un réservoir (Z) en énergie mécanique sous forme de couple,
**caractérisé en ce qu'il**
consiste en : une chaîne (*VK*) avec des billes (Kr) ; une roue (K) à laquelle le mouvement de la chaîne (*VK*) est transféré, la roue (K) comportant des rainures sur sa circonférence à des intervalles réguliers pour recevoir les billes (Kr) ; un réservoir (*Z*), qui peut être sous la forme d'un tuyau vertical, dans lequel est formée une colonne de liquide de hauteur (*H*) et sur lequel est montée, dans sa partie inférieure, une fixation conique avec une buse (*Š*) ; un entonnoir (*L*) qui collecte le liquide s'écoulant hors de la buse (*Š*) et un moyen de guidage (*V*) qui dirige le mouvement de la chaîne (*VK*) de sorte qu'elle se déplace selon une trajectoire rectiligne dans le moyen de guidage (*V*) vers le haut et empêche toute oscillation incontrôlée ; la force de la pression de la colonne de liquide (H) agissant sur la bille (*Kr*) qui est actuellement située dans la buse (*Š*) et la poussant hors de la buse (*Š*), entraînant ainsi la chaîne (*VK*) avec les billes (Kr) dans le moyen de guidage (V) en direction ascendante et le mouvement de la chaîne (*VK*) étant transféré à la roue (*K*), ce qui permet d'obtenir un couple *M_{K},* c'est-à-dire la rotation de la roue (K).

2. Moteur hydroénergétique selon la revendication 1 **caractérisé en ce qu'**un espace libre est prévu entre la bille (Kr) et la buse (s), tandis que l'espace libre est au moins d'une valeur telle que, lorsque la bille (Kr) est située dans la buse (Š), la bille (Kr) ne touche pas la buse (Š), de sorte qu'il n'y a pas de frottement mécanique entre la bille (Kr) et la buse (Š) pendant le fonctionnement du moteur hydroénergétique.

3. Utilisation du moteur hydroénergétique selon la revendication 1 pour la production d'électricité exploitant l'énergie potentielle de la colonne de déchet liquide du système d'égout s'écoulant à travers un ou des bâtiments à plusieurs étages,
**caractérisée en ce**
**qu'**en plus du tuyau d'égout vertical principal (*VKC*), se trouve le moteur hydroénergétique avec le réservoir (*Z*) dans lequel un déchet liquide circule à travers des clapets antiretour (*NV*), et avec un générateur électrique fixé à la roue (K), des clapets antiretour (NV) empêchant le flux de déchet liquide du réservoir (Z) de revenir dans le système d'égout, redirigeant ainsi le déchet liquide dans le tuyau d'égout vertical principal (*VKC*) ; et dès que le niveau de déchet liquide dans le réservoir (Z) tombe au-dessous du niveau du raccord du tuyau d'évacuation d'un certain étage, le clapet antiretour (*NV*) redirige le flux de déchet liquide dans le réservoir (Z) du moteur hydroénergétique, l'énergie hydropotentielle de la colonne de déchet liquide étant convertie d'abord en énergie mécanique puis en énergie électrique.
